# EUROPEAN PATENT SPECIFICATION

(11) **EP 3 323 855 B1**
(45) Date of publication and mention of the grant of the patent: **29.07.2020**
(21) Application number: 17162879.5
(22) Date of filing: 24.03.2017
(51) Int. Cl.: C08L 69/00, F21K 9/27, F21K 9/66

(54) **LED LAMP TUBE HAVING NANOTUBE**
LED-LAMPENRÖHRE MIT NANORÖHRE
TUBE DE LAMPE À DEL AYANT UN NANOTUBE

(30) Priority: 22.11.2016 CN 201611053819
(43) Date of publication of application: 23.05.2018
(73) Proprietor: DONGGUAN PAN AMERICAN ELECTRONICS CO., LTD, DongGuan City, GuangDong 523809 (CN)
(72) Inventor: DENG, Jinsheng, DongGuan City, Guangdong 523809 (CN); ZENG, Xiaoyun, DongGuan City, Guangdong 523809 (CN); TANG, Shilin, DongGuan City, Guangdong 523809 (CN)
(74) Representative: Michalski Hüttermann & Partner Patentanwälte mbB

(56) References cited:
- CN-A- 105 199 356
- CN-U- 205 592 700
- US-A1- 2012 043 884
- US-A1- 2015 267 874

## Description

### FIELD OF THE INVENTION

The present disclosure relates to electronic technique, and more particularly relates to an LED lamp tube having nanotube.

### BACKGROUND OF THE INVENTION

The LED lamp has characteristics of high efficient and long service life, and can continuously provide service for one hundred thousand hours, which is 100 times longer than that of an incandescent light bulb. The conventional LED nanotube is consisted by a heat sink and a lampshade. The heat sink is generally applied to one kind LED lamp tube having nanotube, once the light source is disabled, the integral LED lamp tube having nanotube should be dismantled for replacement, it is resource-wasting, and is not conformity with the mission of advocating energy conservation and environment protection.

### SUMMARY

Accordingly, it is necessary to provide an LED lamp tube having nanotube which is cost saving.

An LED lamp tube according to the present invention includes: a nanotube made of nano-scale material, wherein the nanotube has an elongated shape, and the opposite ends of the nanotube are opened; two connecting terminals connected to the opposite ends of the nanotube, respectively; and an LED light bar mounted in the nanotube, the LED light bar being connected to an external power supply via a driving circuit board and the connecting terminals. Light emitted from the LED light bar is emitted directly through the nanotube, and the nanotube is configured to absorb heat generated by the LED light bar and dissipate the heat into air, wherein the nanotube is made of a composition comprising:
70-90 parts by weight of polycarbonate;
20-30 parts by weight of nanowhisker;
9-12 parts by weight of silicone light diffusing agent;
5-8 parts by weight of ethylene-ethyl acrylate; and
1-3 parts by weight of stearate.

The nanotube of the LED lamp is made of nano-scale materials, causing the LED lamp tube product having nanotube to reduce a material thickness and ensure a powerful function of the product, a stretch resistance and a bend resistance are better, after the lamp light extends through the nanotube, it can reach a light emitting effect which has a nano-scale diffuse reflection. The LED lamp tube is difficult to be deformed after a long-term use and has a long service life.

LED lamps are *inter alia* disclosed in the CN 205 592 700, US 2012/43884, US 2015/267874 and CN 105 199 356.

### BRIEF DESCRIPTION OF THE DRAWINGS

In the accompanying drawings, reference characters refer to the same parts throughout the different views. The drawings are not necessarily to scale; emphasis has instead been placed upon illustrating the principles of the invention. Of the drawings:
FIG. 1 is an isometric view of an LED lamp tube having nanotube according to an embodiment of the present disclosure.
FIG. 2 is an enlarged view of circled portion A of FIG. 1;
FIG. 3 is an exploded view of a nanotube and a connecting terminal of the LED lamp tube of FIG. 1;
FIG. 4 is an enlarged view of circled portion B of FIG. 3;
FIG. 5 is a front view of a nanotube of the LED lamp tube of FIG. 1; and
FIG. 6 is a front view of a connecting terminal of the LED lamp tube of FIG. 1.

### DETAILED DESCRIPTION OF THE EMBODIMENTS

Embodiments of the invention are described more fully hereinafter with reference to the accompanying drawings, in which preferred embodiments of the invention are shown. The various embodiments of the invention may, however, be embodied in many different forms and should not be construed as limited to the embodiments set forth herein. Rather, these embodiments are provided so that this disclosure will be thorough and complete, and will fully convey the scope of the invention to those skilled in the art.

Unless otherwise defined, all terms used herein have the same meaning as commonly understood by one of ordinary skill in the art to which this invention belongs. Terms in the description of the invention are for the purpose of describing specific embodiments, and are not intend to limit the invention.

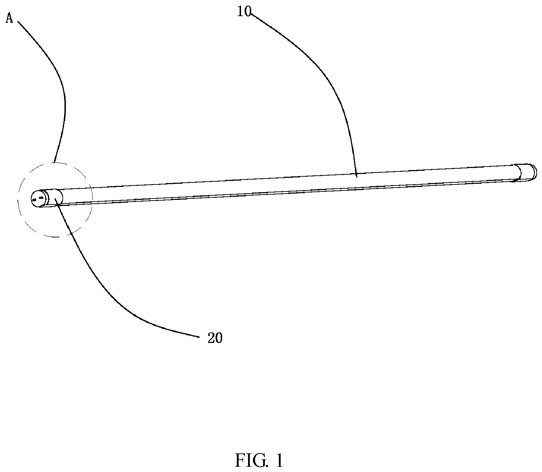

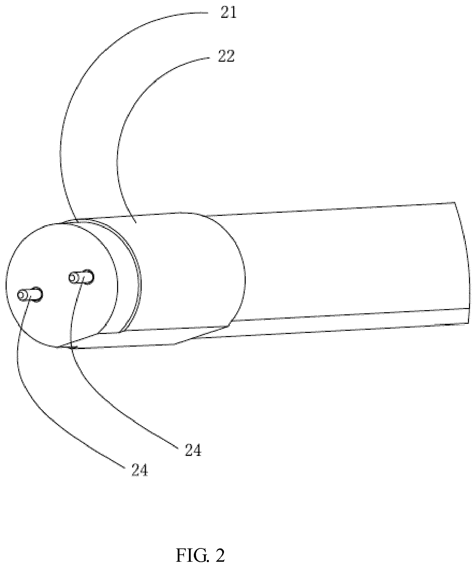

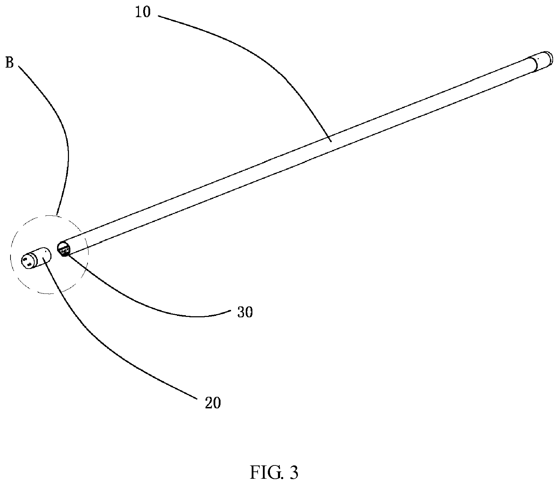

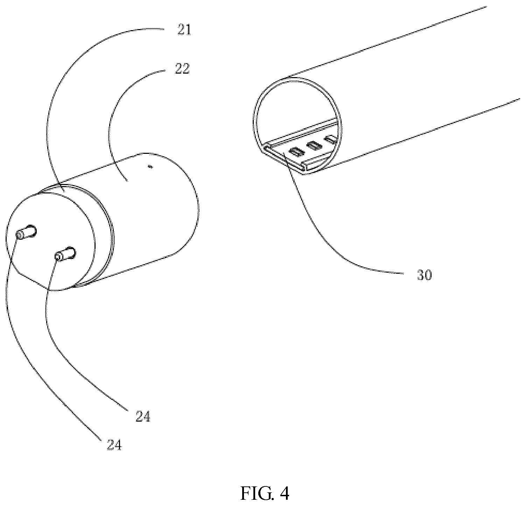

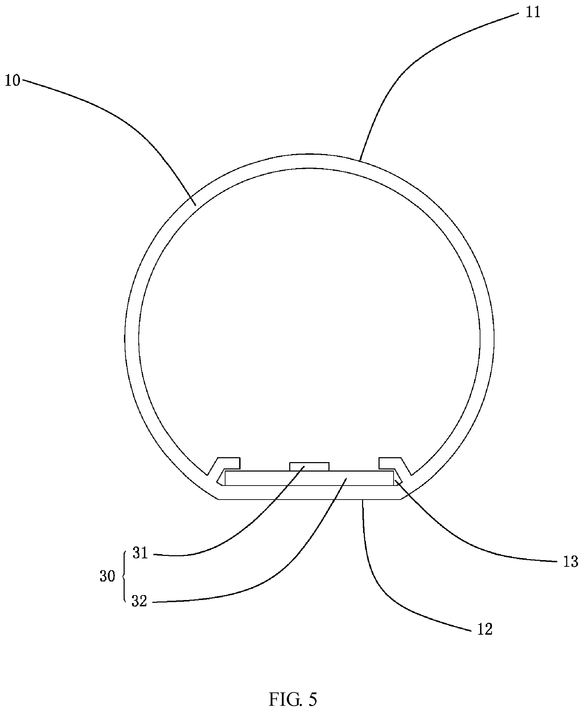

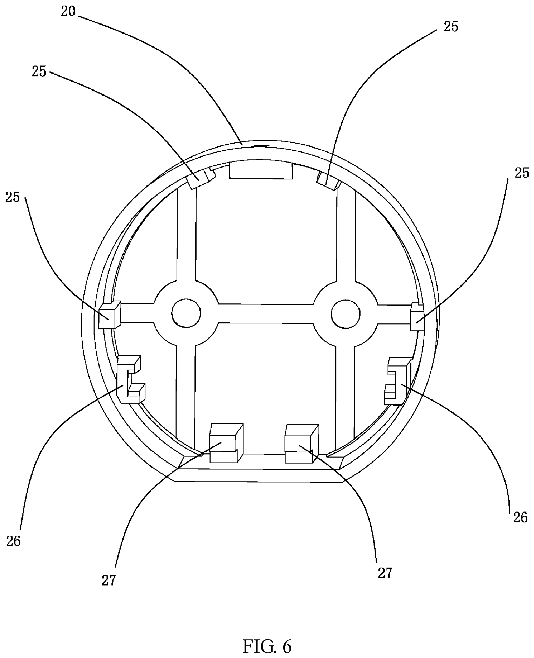

As shown in FIG. 1 through FIG. 6, an LED lamp tube includes: a nanotube 10, two connecting terminals 20 respectively connected to opposite ends of the nanotube 10, and a LED light bar 30 mounted in the nanotube. The LED light bar 30 is connected to an external power supply via a driving circuit board and the connecting terminals 20, thereby emitting light. Light emitted from the LED light bar 30 is emitted directly through the nanotube 10, and at the same time, the heat generated by the LED light bar 30 can be absorbed by the nanotube 10 and be dissipated into the air.

The nanotube 10 has an elongated shape, a circumstance of the nanotube 10 is enclosed and opposite ends of the nanotube 10 are opened. A cross-section of the nanotube 10 has a substantial D-shaped cross-section. The cross-section of the nanotube 10 includes an arc portion 11 and a planar portion 12 connecting opposite ends of the arc portion. The planar portion 12 of the nanotube 10 defines a latching groove 13 thereon. The LED light bar 30 can slide into the latching groove 13 from any one end of the nanotube 10.

The connecting terminal 20 of the LED lamp tube having nanotube is provided with two pluggable pins 24 at an end thereof, the pluggable pins 24 are configured to insert into a socket of the external power supply, thereby connecting the LED lamp tube to a commercial power. The connecting terminal 20 corresponds to the nanotube 10 and has a "D" shape. The connecting terminal 20 includes a main portion 21 and a mounting portion 22 connected to the main portion 21. A size of a cross-section of the mounting portion 22 is greater than that of the nanotube 10, thereby allowing the mounting portion 22 to sleeve on an end of the nanotube 10. An inner wall of the main portion 21 is provided with a first fixing rod 25 extending to an inner wall of the mounting portion 21, a second fixing rod 26, and a latching strip 27. When the nanotube 10 extends into the connecting terminal 20, the first fixing rod 25 and the second fixing rod 26 are configured to fix the nanotube 10. The latching strip 27 is configured to fix the LED light bar 30 which is positioned in the latching groove 13. In the illustrated embodiment, the driving circuit board is mounted in the mounting portion 22 of one of the connecting terminals 20.

The LED light bar 30 includes a plurality of LEDs 31 and a circuit substrate 32. The plurality of LEDs 31 are fixed to the circuit substrate 32, the circuit substrate 32 is electrically connected to the pluggable pins 34 of the connecting terminal 20 via the driving circuit board. A bottom of the circuit substrate 32 closely contacts the planar portion 12 of the nanotube 10, thereby directly conducting the heat generated by the LEDs 31 to the nanotube 10. It can be understood that, thermal grease can be provided between the circuit substrate 32 and the planar portion 12 to increase a heat conduct efficiency.

The circuit fixed between the plurality of LEDs 31 on the circuit substrate 32 is a parallel circuit, even if one LED fails to work, the illumination of other LEDs is not influenced, a service life of the LED lamp tube having nanotube is prolonged.

The nanotube 10 is made of nano-scale materials having high strength and high light diffusion property, causing the LED lamp tube product having nanotube to reduce a material thickness and ensure a powerful function of the product, a stretch resistance and a bend resistance are better, after the lamp light extends through the nanotube, it can reach a light emitting effect which has a nano-scale diffuse reflection. The LED lamp tube is difficult to be deformed after a long-term user and has a long service life.

### Embodiment 1 (not according to the invention):

The nanotube 10 of the present disclosure is made of a composition including:
70 parts by weight of polycarbonate;
20 parts by weight of nanowhisker;
8 parts by weight of silicone light diffusing agent
2 parts by weight of ethylene-ethyl acrylate; and
0.5 parts by weight of stearate.

The polycarbonate is colorless, transparent and heat-resisting, it has a shock resistance, a high impact strength, a better dimensional stability, a better electric insulating property, a high corrosion resistance, and a high abrasive resistance. The nano-cellulose crystal whiskers are highly purified acicular fibrous material having a tiny size which is grown by a single-crystal structure under a manual control condition. The crystal whisker has a tiny diameter. The atoms are highly ordered, and have relative less defects. The crystal whisker is a reinforcing material having high performance. The organosilicone light diffusant is helpful to improve the light diffuse performance of higher haze and high transparency of the nanotube 10. The ethylene-ethyl acrylate is configured to enhance a flexibility of the nanotube 10. The stearate can improve a thermostability and a heat conductive property of the nanotube 10. Aforementioned raw material can be molded into a tubular body by mixing, drying and extruding, and then the tubular body is cooled and shaped to the nanotube 10 of the present disclosure.

### Embodiment 2 (not according to the invention):

The nanotube 10 of the present disclosure is made of a composition including:
85 parts by weight of polycarbonate;
22 parts by weight of nanowhisker;
10 parts by weight of silicone light diffusing agent
2.5 parts by weight of ethylene-ethyl acrylate;
0.6 parts by weight of stearate;
0.5 parts by weight of paraffin; and
1 parts by weight of diphenylamine.

The paraffin can improve the heat storage performance of the nanotube 10, the diphenylamine can improve the ageing resistance of the nanotube 10 when heated.

### Embodiment 3 (not according to the invention):

The nanotube 10 of the present disclosure is made of a composition including:
70 parts by weight of polycarbonate;
20 parts by weight of nanowhisker;
8 parts by weight of silicone light diffusing agent;
2 parts by weight of ethylene-ethyl acrylate;
0.8 parts by weight of nano-scale talcum powder; and
2 parts by weight of p-nitrodiphenylamine.

### Embodiment 4 (not according to the invention):

The nanotube 10 of the present disclosure is made of a composition including:
85 parts by weight of polycarbonate;
20 parts by weight of nanowhisker;
9 parts by weight of silicone light diffusing agent;
2 parts by weight of ethylene-ethyl acrylate;
0.8 parts by weight of nano-scale talcum powder;
2 parts by weight of p-nitrodiphenylamine;
0.6 parts by weight of stearate;
0.7 parts by weight of mixture of nano-scale talcum powder and paraffin; and
1.5 parts by weight of diphenylamine.

### Embodiment 5:

The nanotube 10 of the present disclosure is made of a composition including:
70-90 parts by weight of polycarbonate;
20-30 parts by weight of nanowhisker;
9-12 parts by weight of silicone light diffusing agent
5-8 parts by weight of ethylene-ethyl acrylate; and
1-3 parts by weight of stearate.

In aforementioned LED lamp tube having nanotube, the nanotube 10 is integrally formed along a circumference, it has a transmission function and a heat dissipated function. Because the LED light bar 30 is detachably assembled, when the LED light bar 30 is damaged, the LED light bar 30 can be directly replaced, the residual portion of the LED lamp tube can be used continuously, which is not only cost saving but also environmental protection.

Technical features of above embodiments can be combined arbitrary, for simple, any combination of every technical feature in above embodiments is not all illustrated. However, the technical features which are not contradicted to each other may fall into the scope of the specification.

The above and other features of the invention including various novel details of construction and combinations of parts, and other advantages, will now be more particularly described with reference to the accompanying drawings and pointed out in the claims. It will be understood that the particular method and device embodying the invention are shown by way of illustration and not as a limitation of the invention. The principles and features of this invention may be employed in various and numerous embodiments without departing from the scope of the invention.

## Claims

1. A light-emitting diode (LED) lamp tube, comprising:
a nanotube (10) made of nano-scale material, wherein the nanotube has an elongated shape,
and opposite ends of the nanotube are opened;
two connecting terminals (20) connected to the opposite ends of the nanotube, respectively; and
an LED light bar (30) mounted in the nanotube, the LED light bar being connected to an external power supply via a driving circuit board and the connecting terminals (20);
wherein light emitted from the LED light bar (30) is emitted directly through the nanotube (10), and the nanotube is configured to absorb heat generated by the LED light bar (30) and dissipate the heat into air,
wherein the nanotube is made of a composition comprising:
70-90 parts by weight of polycarbonate;
20-30 parts by weight of nanowhisker;
9-12 parts by weight of silicone light diffusing agent
5-8 parts by weight of ethylene-ethyl acrylate; and
1-3 parts by weight of stearate.

2. The LED lamp tube of claim 1, wherein the nanotube has a D-shaped cross-section, the cross-section of the nanotube comprises an arc portion and a planar portion connecting opposite ends of the arc portion, the planar portion defines a latching groove, the LED light bar is capable of sliding into the latching groove from one end of the nanotube.

3. The LED lamp tube of Claim 1 or 2, wherein the connecting terminal is provided with two pluggable pins, the pluggable pins are configured to be inserted into a socket of an external power supply, thereby connecting the LED lamp tube to a commercial power, a cross-section of the connecting terminal has a shape corresponding to a shape of the cross-section of the nanotube.

4. The LED lamp tube of of any one of claim 1 to claim 3, wherein the connecting terminal comprises a main portion and a mounting portion connected to the main portion, a size of a cross-section of the mounting portion is greater than that of the nanotube, the mounting portion is sleeved on an end of the nanotube.

5. The LED lamp tube of any one of claim 1 to claim 4, wherein an inner wall of the main portion is provided with a first fixing rod extending to an inner wall of the mounting portion, a second fixing rod, and a latching strip, when the nanotube extends into the connecting terminal, the first fixing rod and the second fixing rod are configured to fix the nanotube, and the latching strip is configured to fix the LED light bar which is positioned in the latching groove.

## Patentansprüche

1. LED- (Leuchtdiode) Lampenröhre mit:
einer Nanoröhre (10) aus nanoskaligem Material, wobei die Nanoröhre eine längliche Form aufweist und gegenüberliegende Enden der Nanoröhre geöffnet sind;
zwei Verbindungsanschlüssen (20), die jeweils mit den gegenüberliegenden Enden der Nanoröhre verbunden sind; und
einer LED-Lichtleiste (30), die in der Nanoröhre montiert ist, wobei die LED-Lichtleiste über eine Treiberplatine und die Verbindungsanschlüsse (20) mit einer externen Stromversorgung verbunden ist, wobei von der LED-Lichtleiste (30) emittiertes Licht über die Nanoröhre (10) direkt emittiert wird und die Nanoröhre dafür konfiguriert ist, durch die LED-Lichtleiste (30) erzeugte Wärme zu absorbieren und die Wärme an die Luft abzuführen,
wobei die Nanoröhre aus einer Zusammensetzung hergestellt ist, die aufweist:
70 - 90 Gewichtsteile Polycarbonat;
20 - 30 Gewichtsteile Nanowhisker;
9 - 12 Gewichtsteile Silikon-Lichtdiffusionsmittel;
5 - 8 Gewichtsteile Ethylen-Ethylacrylat; und
1 - 3 Gewichtsteile Stearat.

2. LED-Lampenröhre nach Anspruch 1, wobei die Nanoröhre einen D-förmigen Querschnitt aufweist,
wobei der Querschnitt der Nanoröhre einen Bogenabschnitt und einen planaren Abschnitt aufweist, der gegenüberliegende Enden des Bogenabschnitts verbindet, wobei der planare Abschnitt eine Verriegelungsnut definiert, wobei die LED-Lichtleiste dazu geeignet ist, von einem Ende der Nanoröhre in die Verriegelungsnut zu gleiten.

3. LED-Lampenröhre nach Anspruch 1 oder 2, wobei der Verbindungsanschluss zwei steckbare Stifte aufweist, wobei die steckbaren Stifte dafür konfiguriert sind, in eine Buchse einer externen Spannungsversorgung eingesetzt zu werden, um die LED-Lampenröhre mit einer Netzstromversorgung zu verbinden, wobei ein Querschnitt des Verbindungsanschlusses eine Form hat, die einer Form des Querschnitts der Nanoröhre entspricht.

4. LED-Lampenröhre nach einem der Ansprüche 1 bis 3, wobei der Verbindungsanschluss einen Hauptabschnitt und einen mit dem Hauptabschnitt verbundenen Montageabschnitt aufweist, wobei eine Größe eines Querschnitts des Montageabschnitts größer ist als diejenige der Nanoröhre, und wobei der Montageabschnitt auf einem Ende der Nanoröhre buchsenartig montiert ist.

5. LED-Lampenröhre nach einem der Ansprüche 1 bis 4, wobei an einer Innenwand des Hauptabschnitts ein erster Fixierstab, der sich zu einer Innenwand des Montageabschnitts erstreckt, ein zweiter Fixierstab und ein Verriegelungsstreifen vorgesehen sind, wobei, wenn sich die Nanoröhre in den Verbindungsanschluss erstreckt, der erste Fixierstab und der zweite Fixierstab dafür konfiguriert sind, die Nanoröhre zu fixieren, und wobei der Verriegelungsstreifen dafür konfiguriert ist, die in der Verriegelungsnut positionierte LED-Lichtleiste zu fixieren.

## Revendications

1. Tube de lampe à diode électroluminescente (DEL) comprenant :
un nanotube (10) formé de nanomatériau, dans lequel le nanotube a une forme allongée, et les extrémités opposées du nanotube sont ouvertes ;
deux terminaux de connexion (20) respectivement connectés aux extrémités opposées du nanotube; et
une barre lumineuse DEL (30) montée dans le nanotube, la barre lumineuse DEL étant connectée à une alimentation en courant externe par un tableau de circuit de commande et les terminaux de connexion (20) ;
dans lequel la lumière émise par la barre lumineuse DEL (30) est émise directement à travers le nanotube (10),
et le nanotube est configuré pour absorber la chaleur générée par la barre lumineuse DEL (30) et dissiper la chaleur dans l'air,
dans lequel le nanotube est formé d'une composition comprenant :
70-90 parties en poids de polycarbonate ;
20-30 parties en poids de nanotrichite ;
9-12 parties en poids d'agent de diffusion de lumière en silicone ;
5-8 parties en poids d'éthylène-acrylate d'éthyle ; et
1-3 parties en poids de stéarate.

2. Tube de lampe DEL selon la revendication 1, dans lequel le nanotube a une coupe transversale en forme de D,
la coupe transversale du nanotube comprend une portion arquée et une portion plane connectant les extrémités opposées de la portion arquée, la portion plane définit une rainure de verrouillage, la barre lumineuse DEL est capable de glisser dans la rainure de verrouillage à partir d'une extrémité du nanotube.

3. Tube de lampe DEL selon la revendication 1 ou la revendication 2, dans lequel le terminal de connexion est fourni avec deux broches enfichables, les broches enfichables sont configurées pour être insérées dans une prise d'une alimentation en courant externe, connectant ainsi le tube de lampe DEL à un courant commercial, une coupe transversale du terminal de connexion a une forme correspondant à une forme de la coupe transversale du nanotube.

4. Tube de lampe DEL selon l'une quelconque des revendications 1 à 3, dans lequel le terminal de connexion comprend une portion principale et une portion de montage connectée à la portion principale, une taille d'une coupe transversale de la portion de montage est supérieure à celle du nanotube, la portion de montage est emmanchée sur une extrémité du nanotube.

5. Tube de lampe DEL selon l'une quelconque des revendications 1 à 4, dans lequel une paroi interne de la portion principale est fournie avec une première tige de fixation s'étendant vers une paroi interne de la portion de montage, une deuxième tige de fixation, et une bande de verrouillage, quand le nanotube s'étend dans le terminal de connexion, la première tige de fixation et la deuxième tige de fixation sont configurées pour fixer le nanotube, et la bande de verrouillage est configurée pour fixer la bande lumineuse DEL qui est positionnée dans la rainure de verrouillage.
